# EUROPEAN PATENT APPLICATION

(11) **EP 2 613 525 A1**
(43) Date of publication of application: **10.07.2013**
(21) Application number: 11821584.7
(22) Date of filing: 22.08.2011
(51) Int. Cl.: H04N 7/173

(54) **RECEIVER APPARATUS, RECEPTION METHOD, TRANSMITTER APPARATUS, TRANSMISSION METHOD, PROGRAM AND BROADCAST SYSTEM**

(30) Priority: 25.03.2011 US 201113071551; 30.08.2010 US 378225 P
(71) Applicant: Sony Corporation, Tokyo 108-0075 (JP)
(72) Inventor: KITAZATO Naohisa, Tokyo 108-0075 (JP); HATTORI Shinobu, Tokyo 108-0075 (JP); DEWA Yoshiharu, Tokyo 108-0075 (JP)
(74) Representative: Körber, Martin Hans
(86) International application number: PCT/JP2011/068836
(87) International publication number: WO 2012/029567

(57) **Abstract**

The present invention relates to a receiver, reception method, transmitter, transmission method, program and broadcasting system which can continue or terminate the execution of an active data broadcasting application in accordance with image change operation.

When the image change operation is executed, if there is a data broadcasting application making a transition to active sate, the type of image change operation that initiated the handling of the process in question is determined. App_life_scope stored in association with the active data broadcasting application is referenced. When it is determined that the type of image change operation falls under the scope specified by App_life_scope, the active data broadcasting application remains active. It is determined that the type of image change operation does not fall under the scope specified by App_life_scope, the data broadcasting application is terminated. The present invention is applicable for realizing data broadcasting in the United States, for example.

## Description

### [Technical Field]

The present invention relates to a receiver, reception method, transmitter, transmission method, program and broadcasting system and, more particularly, to a receiver, reception method, transmitter, transmission method, program and broadcasting system suitable for executing or terminating data broadcasting content in response to the progress of a program or CM (commercial message), for example, in digital television broadcasting.

### [Background Art]

Japan has pushed ahead with the digitalization of television broadcasting to date, as a result of which terrestrial, BS and other digital broadcasting has become prevalent. Further, not only program broadcasting but also so-called data broadcasting are available in digital television broadcasting such as digital terrestrial broadcasting. Content of this data broadcasting allows, for example, to display not only information relating to the program being broadcast but also information not relating thereto (e.g., announcement of other program, news, weather forecast and traffic information) (refer, for example, to Patent Literature 1).

It should be noted that a band dedicated to data broadcasting has been set aside in advance within the digital television broadcasting band for the digitalization of the television broadcasting, and that the data broadcasting in Japan has been made possible by broadcasting data broadcasting content using this dedicated band.

In the digital television broadcasting in the United States, on the other hand, no dedicated data broadcasting band is set aside as in Japan.

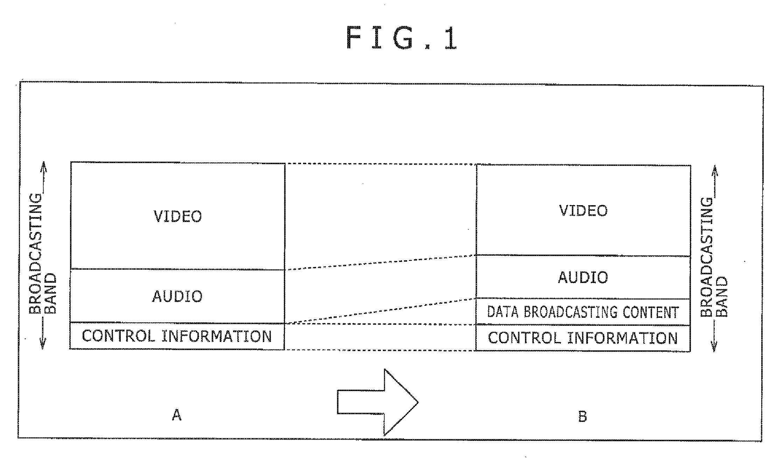

That is, the digital television broadcasting band in the United States is occupied today by the video, audio and control information bands as illustrated in A in Fig. 1, with no band set aside for data broadcasting content. In order to secure a band for data broadcasting content in the limited digital television broadcasting band, therefore, it is necessary to narrow, for example, the video and audio bands.

### [Citation list]

### [Patent Literature]

[PTL 1]
   JP 2006-50237

### [Summary]

### [Technical Problem]

However, securing a band for data broadcasting content by narrowing the video and audio bands leads to degraded image and sound quality, thus making this option far from realistic.

Further, even if a band is secured for data broadcasting content, the size of data that can be transmitted is limited. This results in lack of information for data broadcasting content or takes too long for the receiving side to receive required data if the size of information is increased.

Still further, because a retransmission system of digital television programs using a CATV (cable TV) network is popular in the United States, the following problem may arise.

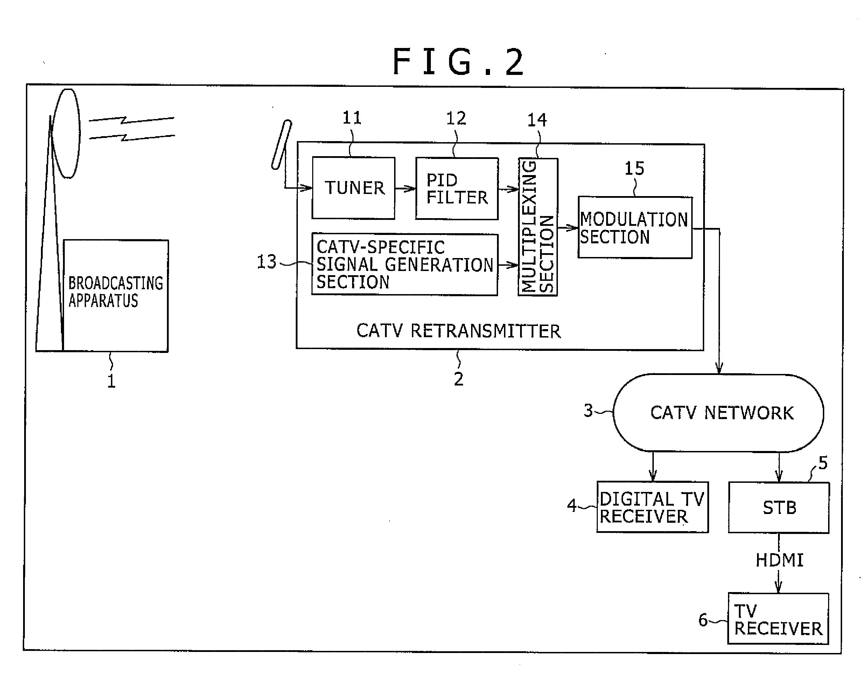

Fig. 2 illustrates an example of a retransmission system of digital television programs using a CATV network.

This retransmission system primarily includes a broadcasting apparatus 1, CATV retransmitter 2, CATV network 3, digital television receiver 4, settop box (STB) 5 and television receiver 6.

The broadcasting apparatus 1 provided, for example, in a broadcasting station broadcasts a digital television broadcasting signal using terrestrial or satellite waves. The CATV retransmitter 2 provided, for example, in a cable TV station receives aired television broadcasting, removes unnecessary information and adds CATV-specific information, thus retransmitting the broadcasting to the digital television receiver 4 and settop box (STB) 5 via the CATV network 3.

The CATV retransmitter 2 includes a tuner 11, PID filter 12 adapted to filter packets having a given packet ID, CATV-specific signal generation section 13, multiplexing section 14 and modulation section 15.

The tuner 11 receives digital television broadcasting signals for different channels and demodulates the signals, thus outputting a TS (transport stream) obtained as a result therefrom to the PID filter 12. The PID filter 12 removes the packet matching a given packet ID from the TS (packet irrelevant to AV content as a program), outputting the resultant TS to the multiplexing section 14. The CATV-specific signal generation section 13 generates a packet containing information specific to the CATV station, outputting the packet to the multiplexing section 14. The multiplexing section 14 multiplexes the output from the PID filter 12 with that from the CATV-specific signal generation section 13, supplying the resultant output to the modulation section 15. The modulation section 15 modulates the output of the multiplexing section 14 by a modulation scheme suitable for the CATV network 3, retransmitting the resultant output to the digital television receiver 4 and settop box 5 via the CATV network 3.

The CATV-compatible digital television receiver 4 receives the retransmitted digital television broadcasting TS via the CATV network 3 and decodes the TS, thus displaying the image obtained therefrom and outputting the sound obtained therefrom.

The CATV-compatible settop box 5 receives the retransmitted digital television broadcasting TS via the CATV network 3 and decodes the TS, thus outputting video and audio signals obtained therefrom to the television receiver 6, for example, via an HDMI cable. The same set 6 displays the image and outputs the sound based on the video and audio signals supplied from the settop box 5, for example, via an HDMI cable.

As described above, the CATV retransmitter 2 removes the packet matching a given packet ID from the TS (packet irrelevant to AV content as a program) using the PID filter 12. Therefore, even if a band is set aside for airing data broadcasting content within the broadcasting band as illustrated in Fig. 1B, the PID filter 12 may eliminate a packet containing data broadcasting content.

The present invention has been made in light of the foregoing, and it is an object of the present invention to implement data broadcasting content that can be executed or terminated in response to the progress of a program or CM without providing a data broadcasting band within the digital television broadcasting band.

### [Solution to Problem]

A receiver according to a first aspect of the present invention receives transmitted AV content and includes extraction means and control means. The extraction means extracts trigger information relating to control over an application program that has been transmitted together with AV content and that is to be executed in response to the AV content. The control means controls the execution of the application program in accordance with the command specified by the extracted trigger information and continues or terminates the execution of the active application program if the images of the AV content are changed.

The control means can continue or terminate the execution of the active application program based on execution continuation information for the application program if the images of the AV content are changed.

The execution continuation information can include one of ES bound, service bound, Provider bound and Un-bound. With ES bound, the execution of the active application program can be continued within the same ES if the images of the AV content are changed. With service bound, the execution of the active application program can be continued within the same service if the images of the AV content are changed. With Provider bound, the execution of the active application program can be continued within the same broadcaster if the images of the AV content are changed. With Un-bound, the execution of the active application program can be continued in an unbound manner if the images of the AV content are changed.

The execution continuation information can be included in the trigger information.

The execution continuation information can be included in the application program.

The control means can further control the acquisition of the application program, the activation thereof, the firing of an event in the active application program, the suspension of the active application program or the termination thereof in accordance with the command specified by the extracted trigger information.

A reception method according to the first aspect of the present invention is a reception method of a receiver adapted to receive transmitted AV content. The reception method includes an extraction step and first and second control steps. The extraction step extracts trigger information relating to control over an application program to be executed in response to the AV content. The first control step controls the execution of the application program in accordance with the command specified by the extracted trigger information. The second control step continues or terminates the execution of the active application program if the images of the AV content are changed.

A program according to the first aspect of the present invention controls a receiver adapted to receive transmitted AV content. The program causes a computer of the receiver to perform a process including an extraction step and first and second control steps. The extraction step extracts trigger information relating to control over an application program that has been transmitted together with AV content and that is to be executed in response to the AV content. The first control step controls the execution of the application program in accordance with the command specified by the extracted trigger information. The second control step continues or terminates the execution of the active application program if the images of the AV content are changed.

In the first aspect of the present invention, trigger information is extracted which relates to control over an application program that has been transmitted together with AV content and that is to be executed in response to the AV content. The execution of the application program is controlled in accordance with the command specified by the extracted trigger information. The execution of the active application program is continued or terminated if the images of the AV content are changed.

A transmitter according to a second aspect of the present invention transmits AV content. The transmitter includes transmission means for transmitting, together with the AV content, trigger information relating to control over an application program to be executed by a receiver in response to the AV content. The trigger information includes execution continuation information used to determine whether to continue or terminate the execution of the active application program if the images of the AV content are changed while the application program is active in the receiver.

The execution continuation information can include one of ES bound, service bound, Provider bound and Un-bound. With ES bound, the execution of the active application program can be continued within the same ES if the images of the AV content are changed by the receiver. With service bound, the execution of the active application program can be continued within the same service if the images of the AV content are changed. With Provider bound, the execution of the active application program can be continued within the same broadcaster if the images of the AV content are changed. With Un-bound, the execution of the active application program can be continued in an unbound manner if the images of the AV content are changed.

The commands specified by the trigger information can include at least one of those adapted to control the acquisition of the application program, the activation thereof, the firing of an event in the active application program, the suspension of the active application program and the termination thereof.

A transmission method according to the second aspect of the present invention is a transmission method of a transmitter adapted to transmit AV content. The transmission method includes a transmission step of transmitting, together with the AV content, trigger information relating to control over an application program to be executed by a receiver in response to the AV content. The trigger information includes execution continuation information used to determine whether to continue or terminate the execution of the active application program if the images of the AV content are changed while the application program is active in the receiver.

A program according to the second aspect of the present invention controls a transmitter adapted to transmit AV content. The program causes a computer of the transmitter to perform a process including a transmission step. The transmission step transmits, together with the AV content, trigger information relating to control over an application program to be executed by a receiver in response to the AV content. The trigger information includes execution continuation information used to determine whether to continue or terminate the execution of the active application program if the images of the AV content are changed while the application program is active in the receiver.

In the second aspect of the present invention, trigger information relating to control over an application program to be executed by a receiver is transmitted together with AV content in response to the AV content. The trigger information includes execution continuation information used to determine whether to continue or terminate the execution of the active application program if the images of the AV content are changed while the application program is active in the receiver.

A broadcasting system according to a third aspect of the present invention includes a transmitter adapted to transmit AV content and a receiver adapted to receive the transmitted AV content. The transmitter includes a transmission means for transmitting, together with the AV content, trigger information relating to control over an application program to be executed by a receiver in response to the AV content. The receiver includes extraction means and control means. The extraction means extracts the trigger information transmitted together with the AV content. The control means controls the execution of the application program in accordance with the command specified by the extracted trigger information and continues or terminates the execution of the active application program if the images of the AV content are changed.

In the third aspect of the present invention, the transmitter transmits, together with the AV content, the trigger information relating to control over the application program to be executed by the receiver in response to the AV content. On the other hand, the receiver extracts the trigger information transmitted together with the AV content, controls the execution of the application program in accordance with the command specified by the extracted trigger information and continues or terminates the execution of the active application program if the images of the AV content are changed.

### [Advantageous Effects of Invention]

The first aspect of the present invention allows to terminate data broadcasting content according to the user operation adapted to change television broadcasting images.

The second aspect of the present invention allows to control the operation of data broadcasting content in the receiver in response to the progress of a television broadcasting or CM.

The third aspect of the present invention allows to control the operation of data broadcasting content in the receiver in response to the progress of a television broadcasting program or CM.

### [Brief Description of Drawings]

[Fig. 1]
   Fig. 1 is a set of diagrams illustrating the digital television broadcasting band.
[Fig. 2]
   Fig. 2 is a diagram illustrating a configuration example of an existing CATV retransmission system.
[Fig. 3]

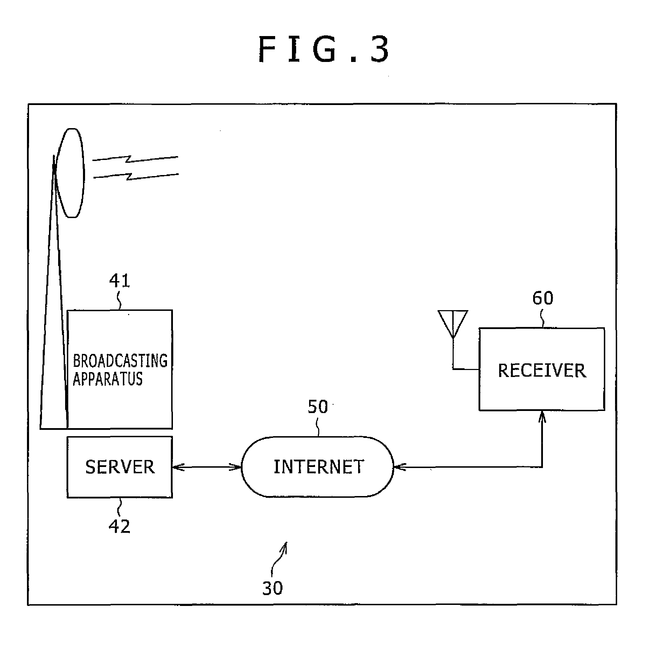

   Fig. 3 is a diagram illustrating a configuration example of a broadcasting system to which the present invention is applied.
[Fig. 4]

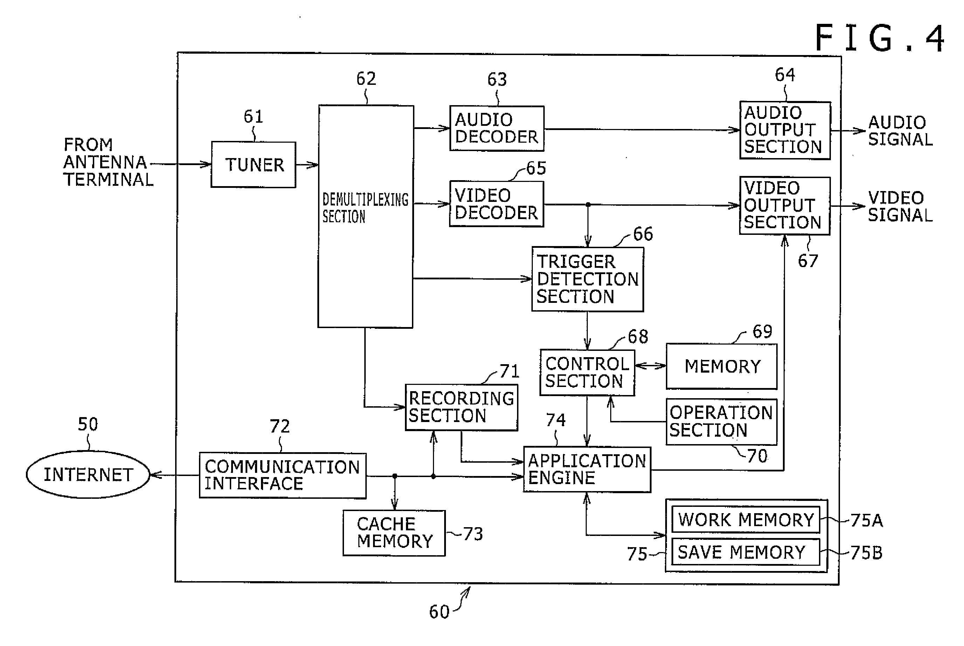

   Fig. 4 is a block diagram illustrating a configuration example of a receiver to which the present invention is applied.
[Fig. 5]

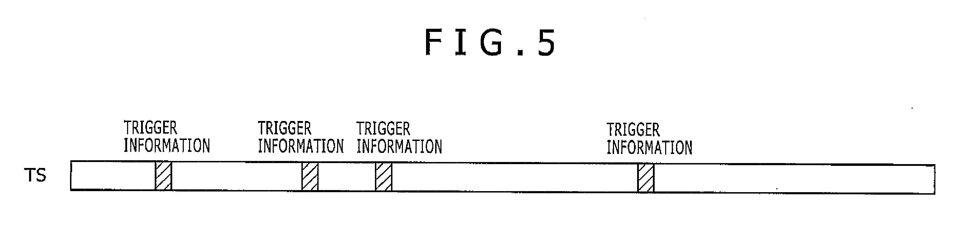

   Fig. 5 is a diagram illustrating the concept of transmitting trigger information in a PCR packet of a TS.
[Fig. 6]

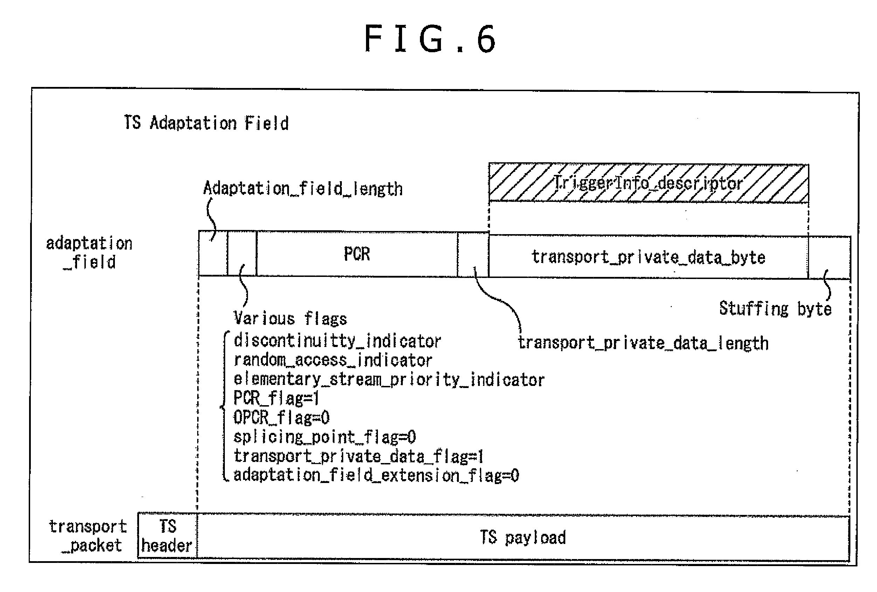

   Fig. 6 is a diagram illustrating the specific arrangement of trigger information in the PCR packet.
[Fig. 7]

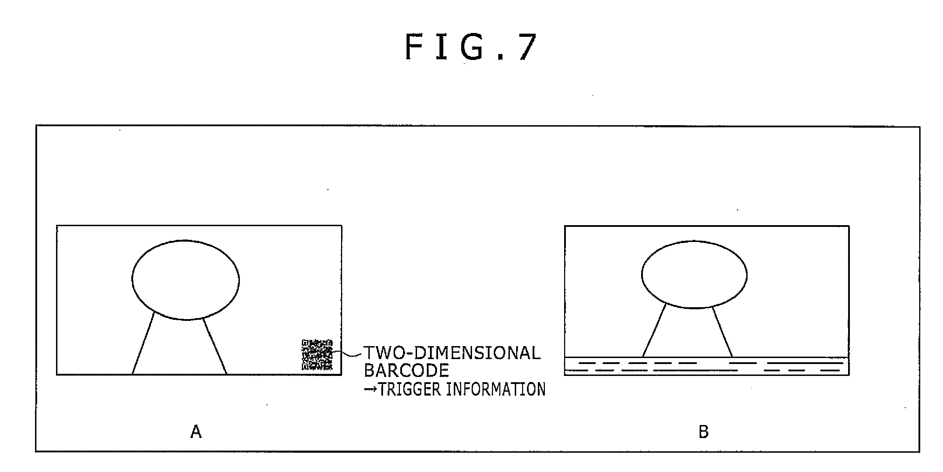

   Fig. 7 is a set of diagrams illustrating examples of embedding trigger information in a video signal.
[Fig. 8]

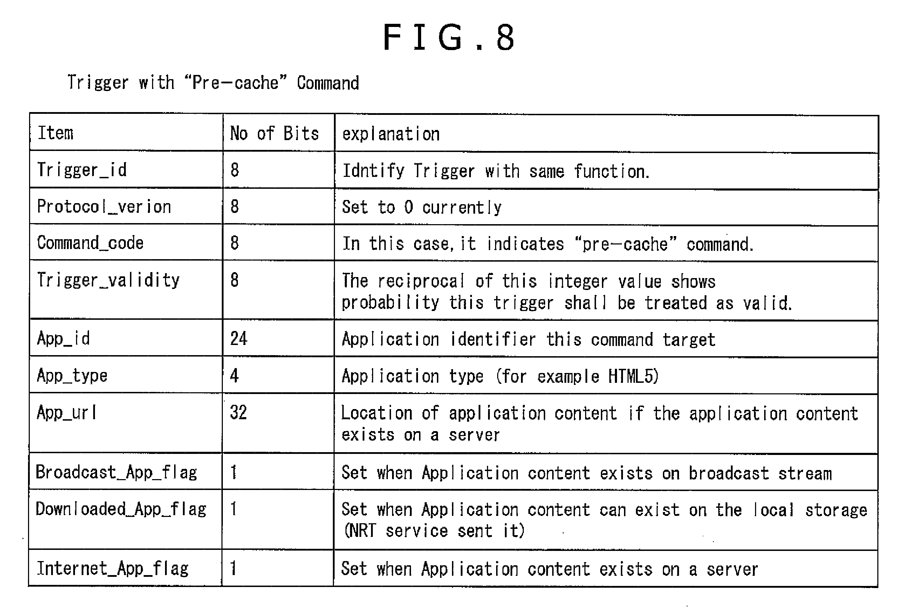

   Fig. 8 is a diagram illustrating the items included in trigger information as a Pre-cache command.
[Fig. 9]

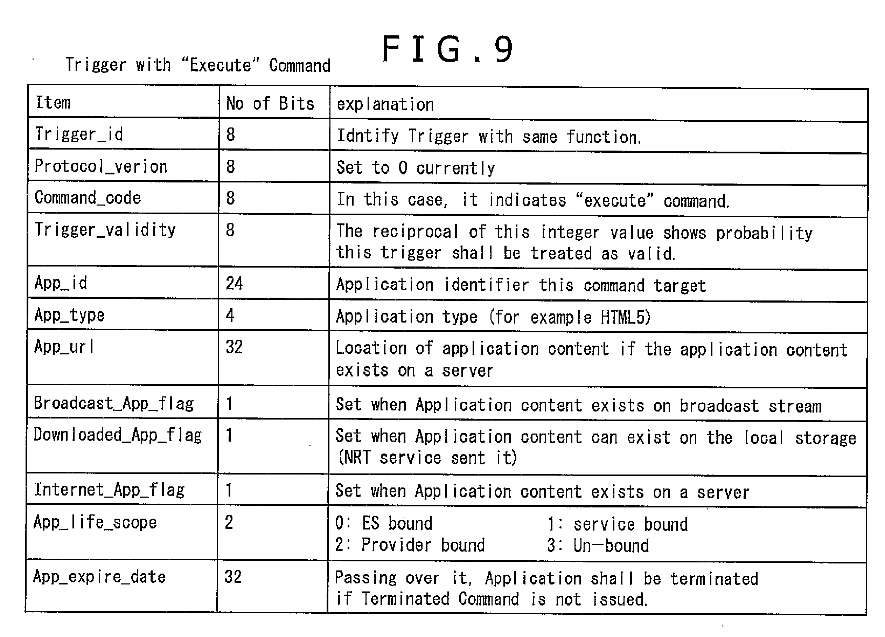

   Fig. 9 is a diagram illustrating the items included in trigger information as an Execute command.
[Fig. 10]

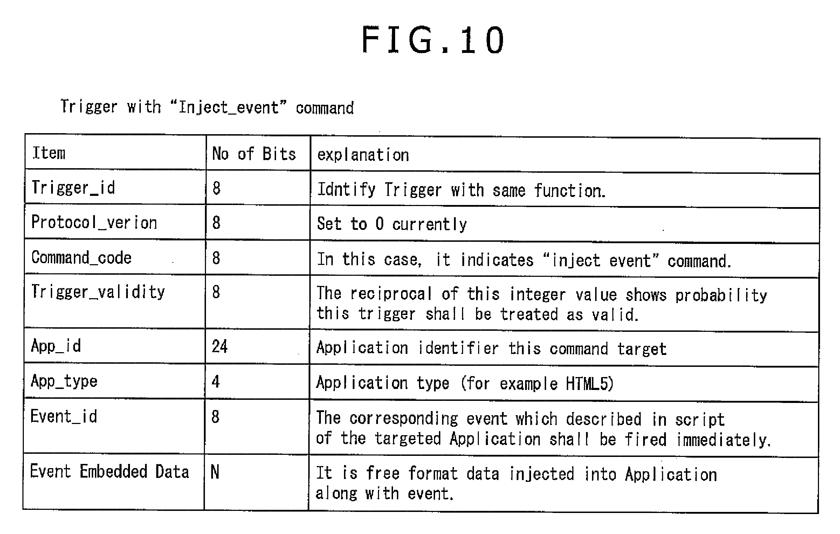

   Fig. 10 is a diagram illustrating the items included in trigger information as an Inject_event command.
[Fig. 11]

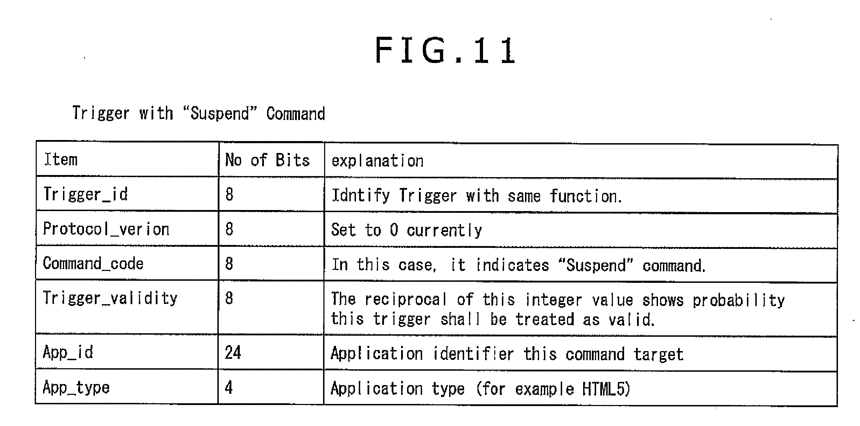

   Fig. 11 is a diagram illustrating the items included in trigger information as a Suspend command.
[Fig. 12]

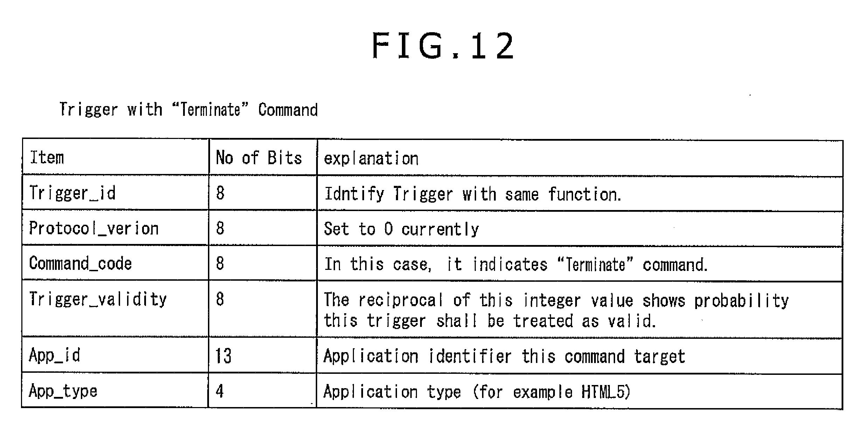

   Fig. 12 is a diagram illustrating the items included in trigger information as a Terminate command.
[Fig. 13]

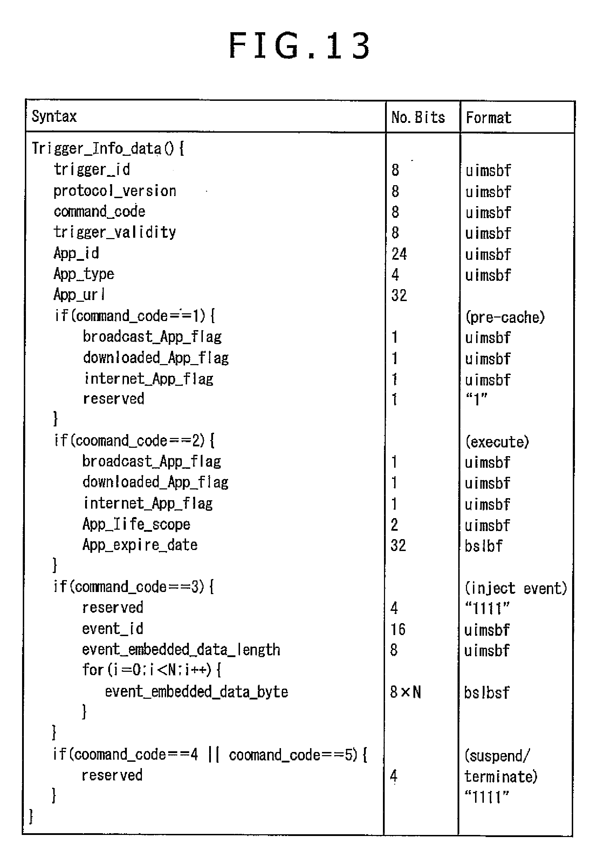

   Fig. 13 is a diagram illustrating an example of syntax of trigger information.
[Fig. 14]

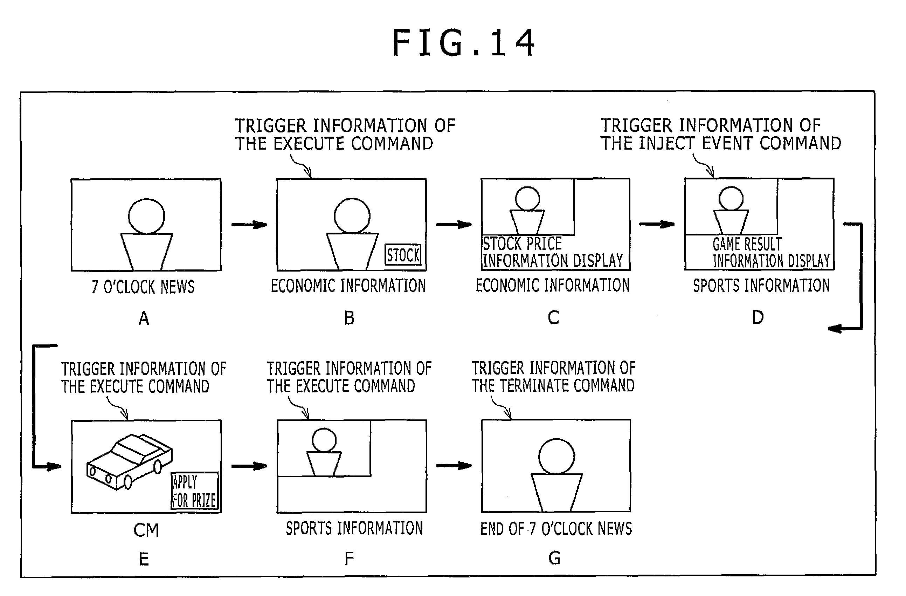

   Fig. 14 is a plurality of diagrams illustrating examples of display when a data broadcasting application program is executed in response to the progress of a program or CM.
[Fig. 15]

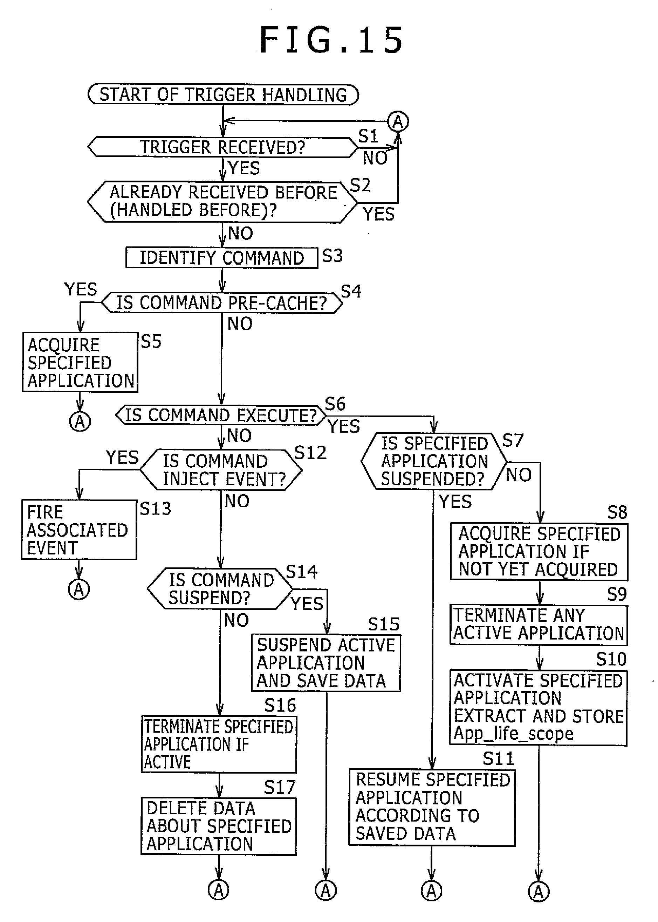

   Fig. 15 is a flowchart describing the handling of trigger information.
[Fig. 16]

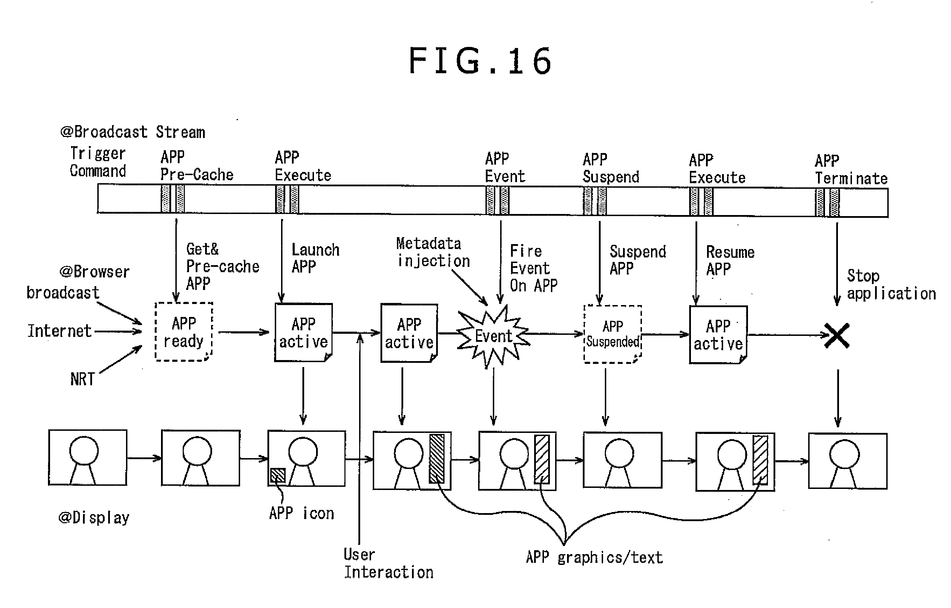

   Fig. 16 is a diagram illustrating an example of operation scenario of the data broadcasting application program.
[Fig. 17]

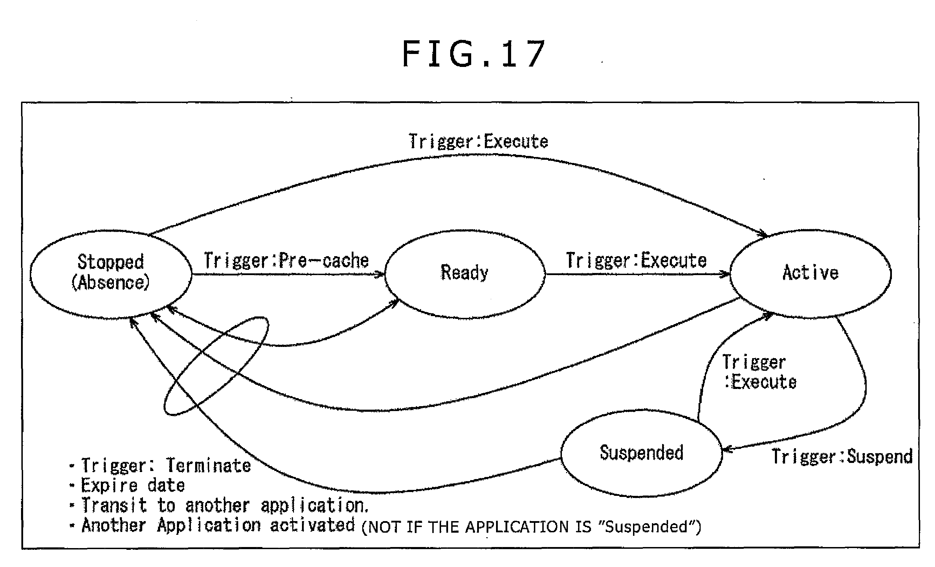

   Fig. 17 is a state transition diagram of the data broadcasting application program.
[Fig. 18]

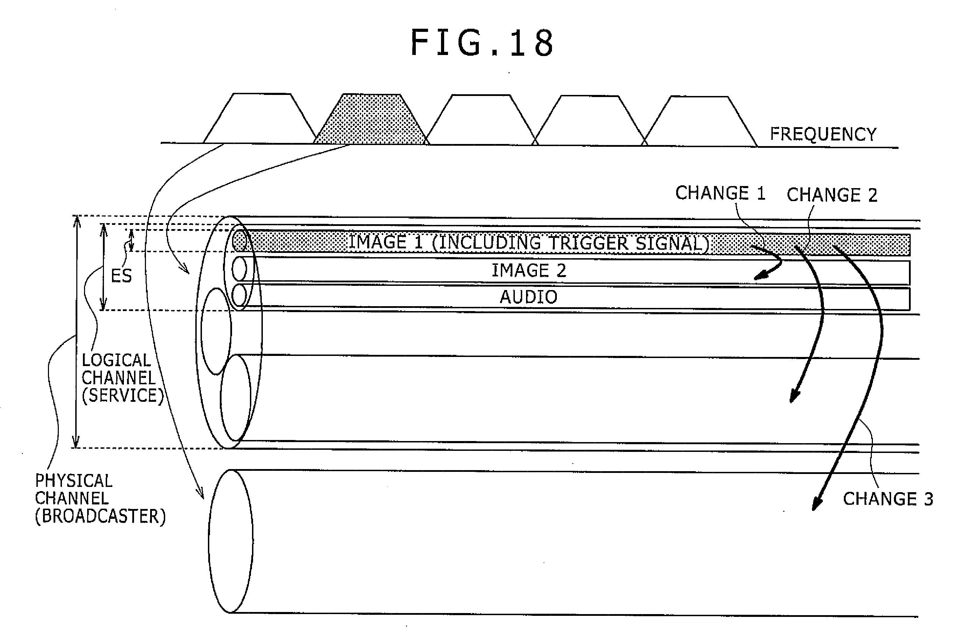

   Fig. 18 is a diagram describing the configuration of a digital broadcasting signal.
[Fig. 19]

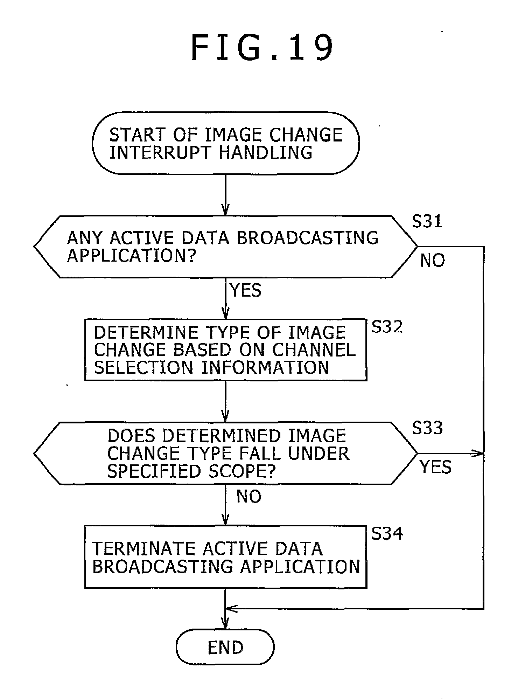

   Fig. 19 is a flowchart describing the handling of an image change interrupt.
[Fig. 20]

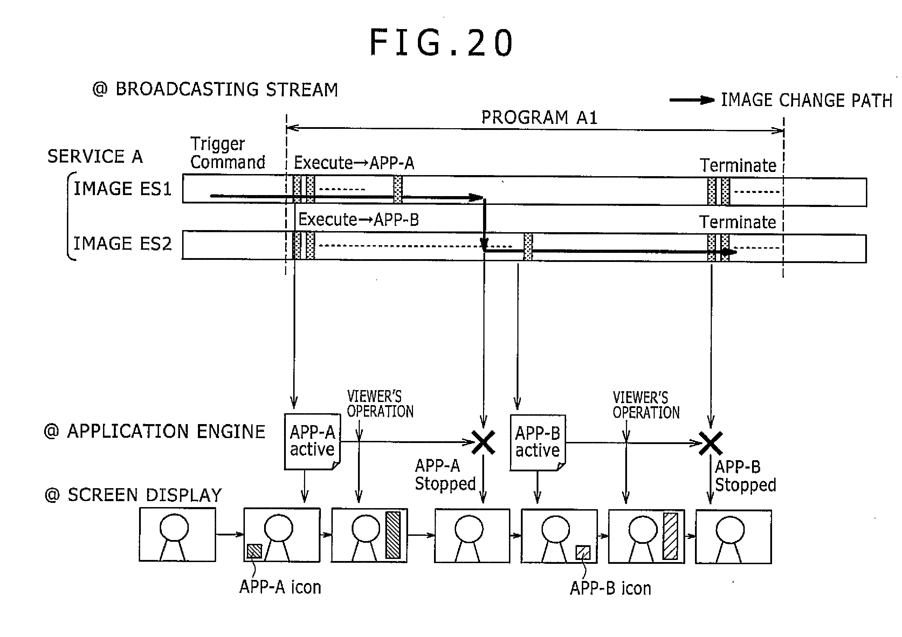

   Fig. 20 illustrates the operation scenario when App_life_scope is ES bound.
[Fig. 21]

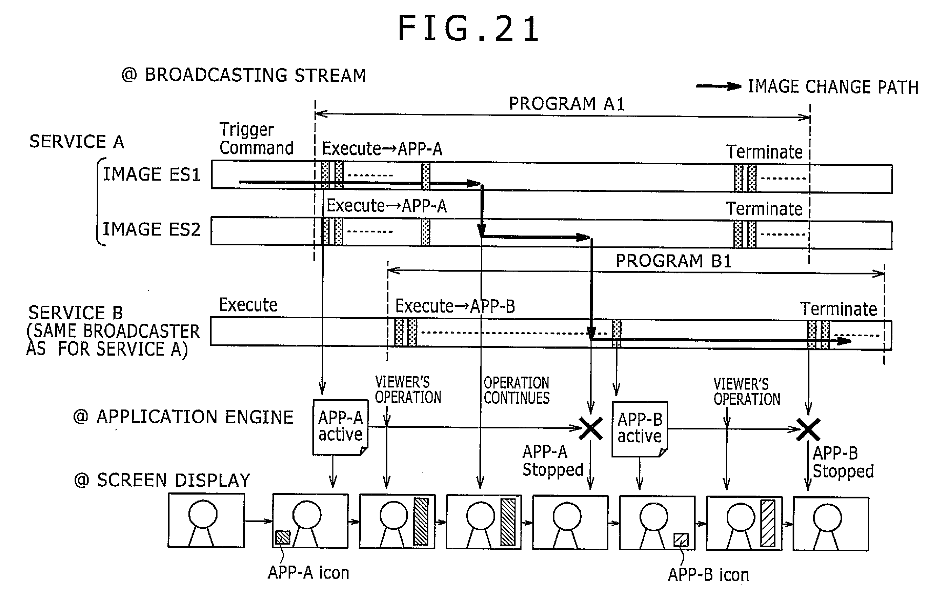

   Fig. 21 illustrates the operation scenario when App_life_scope is service bound.
[Fig. 22]

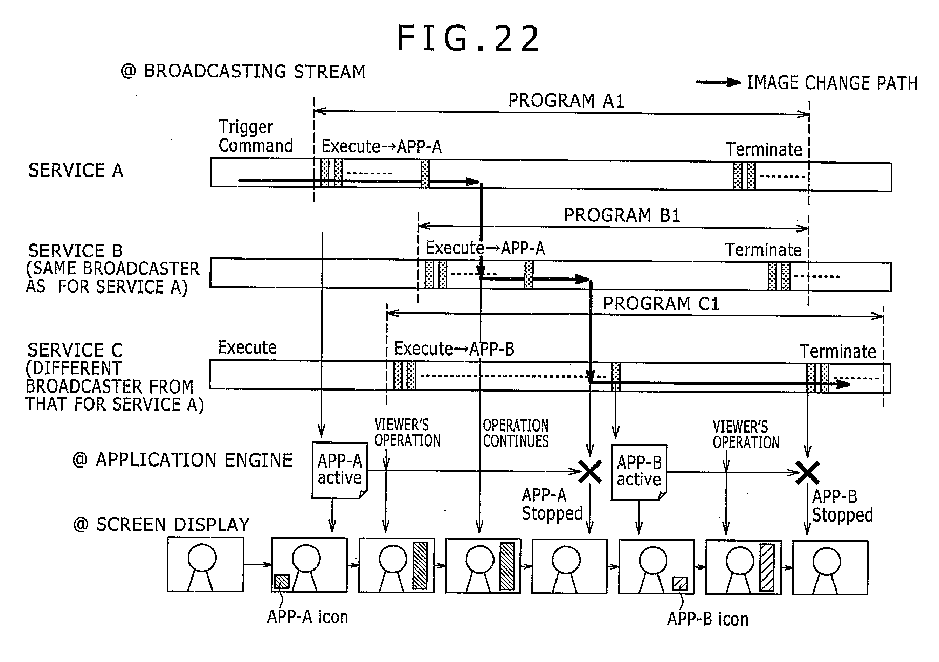

   Fig. 22 illustrates the operation scenario when App_life_scope is Provider bound.
[Fig. 23]

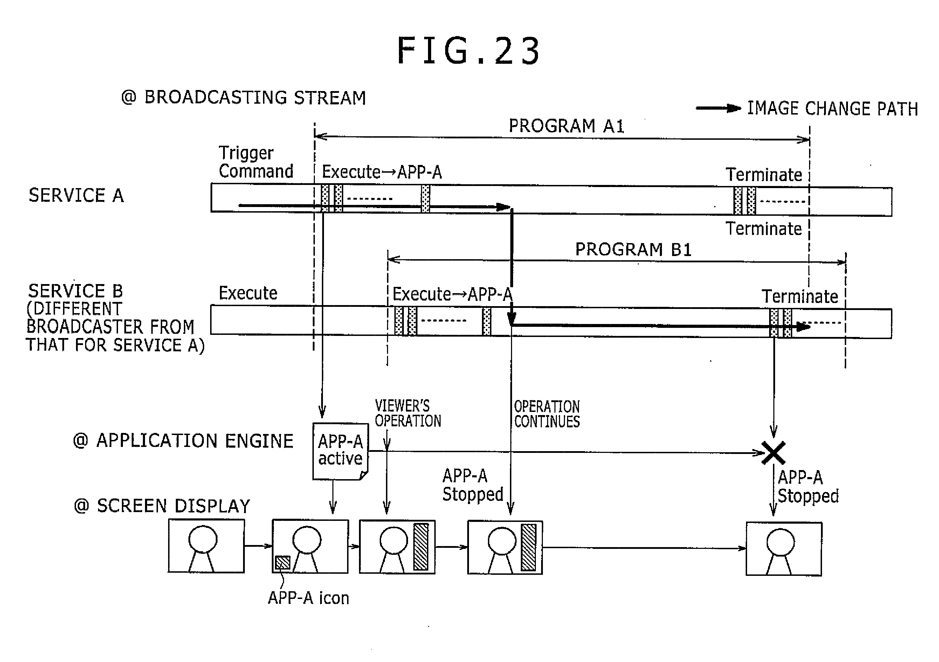

   Fig. 23 illustrates the operation scenario when App_life_scope is Un-bound.
[Fig. 24]

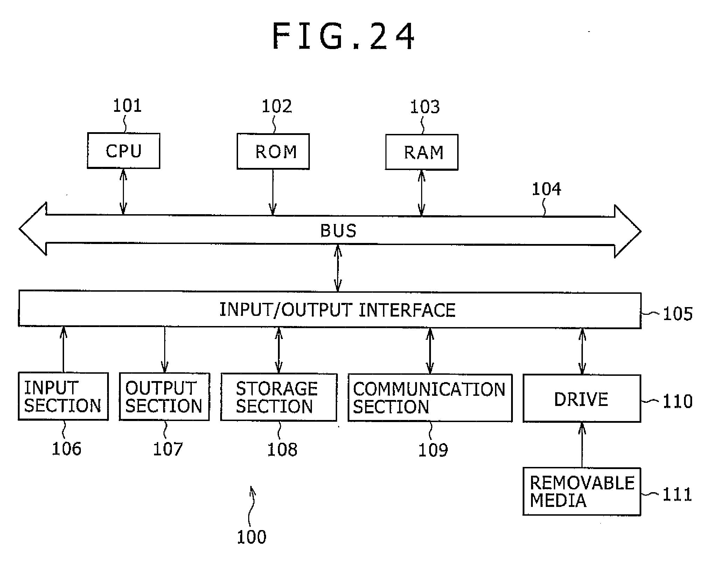

   Fig. 24 is a block diagram illustrating a configuration example of a computer.

### [Description of Embodiments]

A detailed description will be given below of the best mode for carrying out the invention (hereinafter referred to as the embodiment) with reference to the accompanying drawings.

### <1. Embodiment>

### [Configuration Example of the Broadcasting System]

Fig. 3 illustrates a broadcasting system, i.e., an embodiment. A broadcasting system 30 is designed to implement data broadcasting content that can be executed in response to AV content such as program or CM when no band adapted to broadcast data broadcasting content is set aside in the digital television broadcasting band as current state in the United States.

It should be noted that because data broadcasting content is implemented as a result of the execution of an application program supplied to a receiver by the computer of the receiver, data broadcasting content will be hereinafter also referred to as a data broadcasting application program or data broadcasting application.

The broadcasting system 30 includes not only a broadcasting apparatus 41 and server 42 provided at the broadcasting station but also a receiver 60 provided at the recipient.

The broadcasting apparatus 41 transmits a digital television broadcasting signal. Further, the same apparatus 41 transmits trigger information as included in the digital television broadcasting signal. Trigger information is a command adapted to instruct the execution of the data broadcasting content to be executed in response to a program or CM. More specifically, trigger information is multiplexed into a transport stream (TS) of a digital television broadcasting signal or embedded in a video signal for transmission.

Trigger information includes not only information indicating the command type but also that indicating the acquirer of the data broadcasting application. Trigger information will be described in detail later.

The server 42 supplies a data broadcasting application in response to a request from the receiver 60 that accessed the server 42 via the Internet 50.

The receiver 60 receives a digital television broadcasting signal from the broadcasting apparatus 41 and outputs the image and sound of the AV content (e.g., television program and CM) to a monitor (not shown). Further, the receiver 60 accesses the server 42 via the Internet 50, thus acquiring a data broadcasting application. It should be noted that the receiver 60 may be standalone or incorporated, for example, in a television receiver or video recorder.

### [Configuration Example of the Receiver]

Fig. 4 illustrates a configuration example of a receiver 60. The receiver 60 includes a tuner 61, demultiplexing section 62, audio decoder 63, audio output section 64, video decoder 65, trigger detection section 66, video output section 67, control section 68, memory 69, operation section 70, recoding section 71, communication interface 72, cache memory 73, application engine 74 and application memory 75.

The tuner 61 receives and demodulates the digital television broadcasting signal for the channel selected by the user, outputting the resultant TS to the demultiplexing section 62. The demultiplexing section 62 separates the TS supplied from the tuner 61 into an audio coded signal, video coded signal and control signal, outputting each of these signals to the audio decoder 63, video decoder 65 or control section 68.

Further, the demultiplexing section 62 extracts a PCR packet including trigger information from the TS, outputting the PCR packet to the trigger detection section 66.

The audio decoder 63 decodes the supplied audio coded signal, outputting the resultant audio signal to the audio output section 64. The audio output section 64 outputs the supplied audio signal to the subsequent stage (e.g., speaker).

The video decoder 65 decodes the supplied video coded signal, outputting the resultant video signal to the trigger detection section 66 and video output section 67.

The trigger detection section 66 constantly monitors the supplied video signal, detecting the trigger information embedded in the video signal and outputting the trigger information to the control section 68 (this operation of the trigger detection section 66 is not necessary if trigger information is contained only in the TS). Further, the trigger detection section 66 extracts trigger information from the PCR packet including trigger information supplied from the demultiplexing section 62, outputting the trigger information to the control section 68.

The video output section 67 outputs the video signal supplied from the video decoder 65 to the subsequent stage (e.g., display). Further, the video output section 67 combines the image of the data broadcasting application supplied from the application engine 74 with the video signal supplied from the video decoder 65, outputting the combined signal to the subsequent stage.

The control section 68 executes the control program stored in the memory 69, thus controlling the receiver 60 as a whole. Further, the control section 68 controls, for example, the acquisition or activation of a data broadcasting application, the firing of an event, or suspension or termination of such an application based on the trigger information supplied from the trigger detection section 66.

The memory 69 stores the control program to be executed by the control section 68. This program can be updated based on the digital television broadcasting signal or the update data acquired via the Internet 50. In response to a variety of operations of the user, the operation section 70 notifies the control section 68 of the appropriate operation signals.

If a data broadcasting application is distributed using a digital television broadcasting signal, the recoding section 71 downloads the distributed data broadcasting application and holds the application in a built-in recording media.

The communication interface 72 connects to the server 42 via the Internet 50 under control of the application engine 74. The application engine 74 acquires the data broadcasting application from the server 42 via the communication interface 72 and Internet 50 under control of the control section 68, holding the data broadcasting application in the cache memory 73.

The application engine 74 reads the data broadcasting application from the recoding section 71 or cache memory 73 and executes the same application under control of the control section 68.

The application memory 75 includes a work memory 75A and save memory 75B. The application engine 74 records data about the active data broadcasting application (more specifically, includes, for example, hierarchical levels of displayed information) in the work memory 75A. Further, if the active data broadcasting application is suspended, the application engine 74 moves the data in the work memory 75A of the application memory 75 to the save memory 75B. Then, if the suspended data broadcasting application is resumed, the application engine 74 moves the data in the save memory 75B back to the work memory 75A, thus restoring the application to its original state before the application was suspended.

It should be noted that the two areas of the application memory 75 having the same size may alternately serve as the work memory 75A and save memory 75B. This eliminates the need to move the data between the work memory 75A and save memory 75B.

### [Transmission Method of Trigger Information]

A description will be given next of how trigger information is transmitted.

Fig. 5 illustrates the concept of transmitting trigger information as contained in PCR (Program Clock Reference) packets of a TS of a digital television broadcasting signal.

Trigger information is delivered as contained in PCR packets at timings appropriate for execution in response to programs or CMs. Therefore, trigger information is not contained in all PCR packets as shown in Fig. 5. The PCR packets commonly pass through the PID filter 12 of the CATV retransmitter 2 as shown in Fig. 2, thus making it possible to notify a receiver using a CATV network (digital television receiver 4 shown in Fig. 2) of trigger information.

It should be noted that trigger information having the same content is transmitted continuously a plurality of times in consideration of possible radio disturbance and failure of the receiver 60 to receive trigger information (reception failure).

Fig. 6 illustrates the arrangement of trigger information in a PCR packet. The PCR packet is a packet containing PCR in the adaptation_field of a TS packet. Trigger information (Trigger Info_descriptor in Fig. 6) is contained in transport_private_data_byte following the PCR. It should be noted that if trigger information is contained, transport_private_data_flag of Various_flags preceding the PCR is set to "1."

Although Figs. 5 and 6 illustrate a case in which trigger information is contained in a PCR packet of a TS for transmission, the storage location and transmission method of trigger information are not limited thereto. Alternatively, trigger information may be embedded in the video signal ofAV content.

Fig. 7 illustrates two examples of embedding trigger information in a video signal.

Diagram A in Fig. 7 illustrates a case in which trigger information is translated into a two-dimensional barcode and in which the barcode is superimposed and synthesized at a predetermined position (bottom right corner in this case) on the image of the video signal. Diagram B in Fig. 7 illustrates a case in which trigger information is translated into a video code and in which the video code is synthesized at several bottom lines on the image of the video signal. Trigger information shown in diagrams A and B in Fig. 7 is detected by the trigger detection section 66 of the receiver 60.

In both of the examples shown in diagrams A and B in Fig. 7, the trigger information is arranged on the screen of a television program. Therefore, it is also possible to notify a receiver using a CATV network (television receiver 6 shown in Fig. 2) of trigger information.

On the other hand, the trigger information (two-dimensional barcode or video code) is visible by the user of the receiver 60 in both of the examples shown in diagrams A and B in Fig. 7. However, if this is not preferred, it is only necessary to mask the trigger information on the image with the same pixels as those surrounding the trigger information.

### [Detailed Description of Trigger Information]

A detailed description will be given next of trigger information. Trigger information is classified according to the command indicated thereby. There are five different commands, namely, Pre_cache command, Execute command, Inject_event command, Suspend command and Terminate command. It should be noted that a command or commands other than the above may be added.

Fig. 8 illustrates the items included in the trigger information as the Pre-cache command. The Pre-cache command is designed to instruct the receiver 60 to acquire a data broadcasting application.

Trigger_id is information used to identify the trigger information in question. If the trigger information having the same content is transmitted a plurality of times, Trigger_id is the same in all the pieces of trigger information. Protocol_version indicates the protocol version of the trigger information in question. Command_code indicates the command type of the trigger information in question. In the case of Fig. 8, Command_code includes information indicating that the command is Pre-cache.

Trigger_varidity indicates the probability for each of the receivers 60 that have received the trigger information in question to perform processes in accordance with the same trigger information. This value distributes the accesses of the plurality of receivers 60 to the server 42 to acquire the data broadcasting applications, thus preventing the concentration of accesses during a given period of time. In order to distribute the accesses of the possibly many receivers 60 to the server 42 into four parts, for example, the same trigger information is transmitted four times. The server access distribution parameter N need only be set to "4" in the first trigger information, to "3" in the second trigger information, to "2" in the third trigger information, and to "1" in the fourth trigger information.

App_id is identification information of the data broadcasting application to be acquired for the trigger information in question. App_type indicates the type (e.g., HTML5, BML or java) of the data broadcasting application for the trigger information in question. App_url is the URL of the acquirer (server 42 in this case) of the data broadcasting application.

Broadcast_App_flag, Downloaded_App_flag and Internet_App_flag are flags indicating the location of the program data of the data broadcasting application for the trigger information in question. Broadcast_App_flag is set to "1" when the data broadcasting application for the trigger information in question can be acquired from the digital television broadcasting signal. Downloaded_App_flag is set to "1" when the data broadcasting application for the trigger information in question has already been downloaded by download broadcasting services and can be acquired from a local storage (e.g., recording section 71) so long as the receiver 60 has received the application. Internet_App_flag is set to "1" when the data broadcasting application for the trigger information in question can be acquired from the application server 42 via the Internet 50.

Fig. 9 illustrates the items included in the trigger information as the Execute command. The Execute command is designed to instruct the receiver 60 to activate a data broadcasting application.

Trigger_id, Protocol_version, Command_code, Trigger_varidity, App_id, App_type, App_url, Broadcast_App_flag, Downloaded_App_flag and Internet_App_flag are the same as those in the trigger information as the Pre-cache command shown in Fig. 8. It should be noted, however, that Command_code includes information indicating that the command is Execute.

App_life_scope in trigger information includes information indicating the condition for continuing the execution of the data broadcasting application activated in accordance with trigger information as the active Execute command in question if a variety of user operations are made to change the images (which will be described later).

More specifically, App_life_scope includes one of ES bound, service bound, Provider bound and Un-bound.

ES bound means that the execution of the data broadcasting application continues while the same video ES (elementary stream) is decoded and reproduced. That is, for example, the active data broadcasting application is terminated, for example, if the image is changed to the one having a different viewpoint in the same program.

Service bound means that the execution of the data broadcasting application continues while the same service (so-called channel) is selected. That is, the active data broadcasting application is terminated if the services are changed.

Provider bound means that the execution of the data broadcasting application continues while a service is received from the same provider (broadcaster). That is, the execution of the data broadcasting application continues when the services are changed within the same provider. On the other hand, the execution of the data broadcasting application is terminated if the services are changed between different providers.

Un-bound means that the execution of the data broadcasting application continues even if the images are changed. That is, Un-bound means the active data broadcasting application is not terminated even if the services are changed, and that the active data broadcasting application is terminated only when trigger information of the Terminate command which will be described later is received.

Providing App_life_scope in the trigger information as the Execute command makes it possible to continue the execution of the data broadcasting application even if the user makes an operation to change the images so long as this change takes place within the same service or broadcaster. Further, it is possible to continue the execution of a data broadcasting application common to all the services (channels).

App_expire_date included in the trigger information indicates the date when the active data broadcasting application is terminated without receiving the Terminate command.

Fig. 10 is a diagram illustrating the items included in the trigger information as the Inject_event command. The Inject_event command is designed to cause the receiver 60 to fire an event in an active data broadcasting application.

Trigger_id, Protocol_version, Command_code, Trigger_varidity, App_id and App_type are the same as those in the trigger information as the Pre-cache command shown in Fig. 8. It should be noted, however, that Command_code includes information indicating that the command is Inject_event.

Event_id is identification information about the event to be fired in the data broadcasting application specified by the App_id. Event Embedded Data includes data referenced when the event is fired.

Fig. 11 illustrates the items included in the trigger information as the Suspend command. The Suspend command is designed to cause the receiver 60 to suspend an active data broadcasting application.

Trigger_id, Protocol_version, Command_code, Trigger_varidity, App_id and App_type are the same as those in the trigger information as the Pre-cache command shown in Fig. 8. It should be noted, however, that Command_code includes information indicating that the command is Suspend.

Fig. 12 illustrates the items included in the trigger information as the Terminate command. The Terminate command is designed to cause the receiver 60 to terminate an active data broadcasting application.

Trigger_id, Protocol_version, Command_code, Trigger_varidity, App_id and App_type are the same as those in the trigger information as the Pre-cache command shown in Fig. 8. It should be noted, however, that Command_code includes information indicating that the command is Terminate.

### [Syntax of Trigger Information]

Fig. 13 illustrates an example of syntax of the trigger information as one of the above commands. It should be noted that any syntax can be used for trigger information and that the syntax thereof is not limited to the example shown in Fig. 13.

### [Description of the Operation]

A description will be given next of the operation of the receiver 60 in accordance with trigger information.

Diagrams A to G in Figs. 14 illustrate the changes of the display screen of the receiver 60 when the receiver 60 executes an appropriate data application program such as television program or CM.

For example, a program ("7 O'clock News" in this case) is broadcast as illustrated in diagram A in Fig. 14. When the topic of the program moves on to economic information, trigger information of the Execute command for the data broadcasting application appropriate to the program is transmitted. When this information is received, the data broadcasting application is activated. As a result, an icon ("Stock" in this case) appears on the screen displaying the program to prompt the user to display the data broadcasting application as illustrated in diagram B in Fig. 14.

When the user selects the icon, the data broadcasting application produces a display (stock price information in this case) on the screen as illustrated in diagram C in Fig. 14. As described above, the data broadcasting application produces a display only when the icon appears to prompt the user to display the data broadcasting application. This avoids possible inconvenience to those users who do not need any display produced by the data broadcasting application.

When the program moves on (to sports information in this case), the trigger information of the Inject_event command is transmitted in response thereto. When this information is received, an event is fired, thus changing the screen displayed by the data broadcasting application, for example, to that shown in diagram D in Fig. 14 (game result information in this case).

Then, before a CM is broadcast, the trigger information of the Suspend command for the active data broadcasting application appropriate to the program is transmitted. When this information is received, the data broadcasting application for the program is suspended. Then, the trigger information of the Execute command for the data broadcasting application appropriate to the CM is transmitted. When this information is received, the data broadcasting application for the CM program is activated. As a result, an icon ("Apply for prize" in this case) appears on the screen displaying the CM so as to prompt the user to display the data broadcasting application appropriate to the CM as illustrated in diagram E in Fig. 14.

When the user selects the icon, the data broadcasting application appropriate to the CM produces a display (display for application for a prize in this case) on the screen.

After the CM ends, the trigger information of the Execute command for the data broadcasting application appropriate to the program is transmitted in response to the resumption of the program. When this information is received, the display of the data broadcasting application appropriate to the CM disappears, allowing for the display of the data broadcasting application for the program to be resumed from the state in which the application was suspended as illustrated in diagram F in Fig. 14.

Then, when the program ends, the trigger information of the Terminate command for the data broadcasting application appropriate to the program is transmitted in response thereto. When this information is received, the display of the data broadcasting application disappears from the screen, and only the image of the program remains on the screen as illustrated in diagram G in Fig. 14.

It should be noted that, in addition to providing an area for the display of the data broadcasting application by shrinking the program display as illustrated in Figs. 14, the display of the data broadcasting application may be superimposed, for example, on the program display.

A description will be given next of the operation when the receiver 60 receives trigger information (hereinafter referred to as handling of trigger information) with reference to Fig. 15.

Fig. 15 is a flowchart describing the handling of trigger information. This handling of trigger information is repeated when the user watches a television program, that is, while the receiver 60 receives the digital television broadcasting signal.

In step S 1, the trigger detection section 66 waits until a PCR packet including trigger information is supplied from the demultiplexing section 62 or until trigger information is detected from a video signal output from the video decoder 65. The process proceeds to step S2 when a PCR packet including trigger information is supplied or trigger information is detected from a video signal.

In step S2, the trigger detection section 66 outputs trigger information to the control section 68. The control section 68 reads Trigger_id from the trigger information to determine whether the process steps from step S3 and beyond have already been performed for the trigger information in question. When it is determined that the process steps from step S3 and beyond have already been performed, the process returns to step S1 to repeat the steps from there onward. In contrast, if it is determined that the process steps from step S3 and beyond have yet to be performed, the process proceeds to step S3.

In step S3, the control section 68 reads Command_code from the trigger information to determine which of Pre-cache, Execute, Inject_event, Suspend and Terminate is indicated by the trigger information in question.

In step S4, the control section 68 determines whether the command identified in step S3 is Pre-cache. When the identified command is Pre-cache, the process proceeds to step S5.

In step S5, the program data of the data broadcasting application identified by the App_id of the trigger information in question is acquired. More specifically, when Broadcast_App_flag is "1" in the trigger information in question, the program data of the data broadcasting application identified by App_id is acquired from the television broadcasting signal and recorded to the recording section 71. When Downloaded_App_flag is "1" in the trigger information in question, the program data of the data broadcasting application identified by App_id is acquired from the recording section 71, i.e., the local storage. When Internet_App_flag is "1" in the trigger information in question, the program data of the data broadcasting application identified by App_id is acquired from the server 42 via the Internet 50 and recorded to the cache memory 73. It should be noted that if two or more of Broadcast_App_flag, Downloaded_App_flag and Internet_App_flag are set to "1," it is possible to acquire the program data of the data broadcasting application identified by App_id of the trigger information in question according to the convenience of the receiver 60. Then, the process returns to step S 1 to repeat the steps from there onward.

If it is determined in step S4 that the command identified in step S3 is not Pre-cache, the process proceeds to step S6. In step S6, the control section 68 determines whether the command identified in step S3 is Execute. When it is determined that the identified command is Execute, the process proceeds to step S7.

In step S7, the application engine 74 determines, under control of the control section 68, whether the data broadcasting application identified by App_id of the trigger information in question is suspended. More specifically, the application engine 74 determines that the data broadcasting application identified by App_id is suspended when data indicating the suspension is saved in the save memory 75B.

If it is determined in step S7 that the data broadcasting application identified by App_id is not suspended, the process proceeds to step S8. In step S8, the application engine 74 acquires, under control of the control section 68, the program data of the data broadcasting application identified by App_id if the same data has yet to be acquired (if the same data is not stored in the recording section 71 or cache memory 73).

In step S9, the application engine 74 terminates, under control of the control section 68, any active data broadcasting application.

In step S10, the application engine 74 activates, under control of the control section 68, the data broadcasting application identified by App_id. The control section 68 extracts App_life_scope from the trigger information and stores the extracted App_life_scope in association with the activated data broadcasting application. The App_life_scope stored here is referenced later during the handling of an interrupt when the user makes an operation to change the images (the handling of an interrupt will be described in detail later with reference to Fig. 19). Then, the process returns to step S1 to repeat the steps from there onward.

It should be noted that when it is determined in step S7 that the data broadcasting application identified by App_id is suspended, the process proceeds to step S11. In step S11, the application engine 74 moves, under control of the control section 68, the data in the save memory 75B to the work memory 75A and activates the data broadcasting application identified by App_id. This allows for the suspended data broadcasting application identified by App_id to be resumed from the state in which the application was suspended. Then, the process returns to step S 1 to repeat the steps from there onward.

If it is determined in step S6 that the command identified in step S3 is not Execute, the process proceeds to step S 12. In step S 12, the control section 68 determines whether the command identified in step S3 is Inject_event. When it is determined that the identified command is Inject_event, the process proceeds to step S13.

In step S 13, the control section 68 controls the application engine 74 to fire (execute) the event matching the Event_id of the trigger information in the active data broadcasting application only when App_id of the trigger information in question agrees with App_id of the active application. Then, the process returns to step S 1 to repeat the steps from there onward.

If it is determined in step S12 that the command identified in step S3 is not Inject_event, the process proceeds to step S 14. In step S 14, the control section 68 determines whether the command identified in step S3 is Suspend. When it is determined that the identified command is Suspend, the process proceeds to step S15.

In step S 15, the application engine 74 saves, under control of the control section 68, the data indicating the state of the active data broadcasting application (i.e., data currently written to the work memory 75A; includes information indicating the hierarchical level of displayed information if the information to be displayed has a hierarchical structure) to the save memory 75B. Then, the process returns to step S 1 to repeat the steps from there onward.

If it is determined in step S14 that the command identified in step S3 is not Suspend, the command identified in step S3 should have been Terminate. Therefore, the process proceeds to step S16. In step S16, the application engine 74 terminates, under control of the control section 68, the data broadcasting application identified by App_id if the same application is active. In step S17, the application engine 74 deletes, under control of the control section 68, the data about the data broadcasting application identified by App_id from the work memory 75A and save memory 75B and deletes the program data of the same application from the recording section 71 or cache memory 73. Then, the process returns to step S1 to repeat the steps from there onward.

This concludes the description of the handling of trigger information. The above handling of trigger information makes it possible, for example, to activate a data broadcasting application, fire an event or terminate a data broadcasting application in response to a television program or CM. Further, it is also possible to suspend a data broadcasting application while at the same time holding the application active and then resume the data broadcasting application from suspension.

Further, the handling of trigger information makes it possible to operate a data broadcasting application as illustrated in Fig. 16.

### [Operation Scenario of Data Broadcasting Application]

Fig. 16 illustrates an example of operation scenario of a data broadcasting application.

When the broadcasting apparatus 41 transmits trigger information of the Pre-cache command to instruct the acquisition of the data broadcasting application for a television program in response to the progress of the program, the receiver 60 that received the trigger information acquires the data broadcasting application.

Next, when the broadcasting apparatus 41 transmits trigger information of the Execute command adapted to activate the data broadcasting application for the television program in response to the progress of the program, the receiver 60 that received the trigger information activates the data broadcasting application. As a result of the activation of the application, an icon is superimposed on the image of the program to prompt the user to display the data broadcasting application.

When the user selects this icon, the display produced by the data broadcasting application is superimposed on the image of the program on the screen.

When the broadcasting apparatus 41 transmits trigger information of the Inject_event command adapted to instruct the firing of an event in response to the progress of the television program, the receiver 60 that received the trigger information fires an event in the active data broadcasting application (e.g., changes the display).

Then, when the broadcasting apparatus 41 transmits trigger information of the Suspend command adapted to instruct the suspension of the data broadcasting application at a predetermined timing, the receiver 60 that received the trigger information suspends the active data broadcasting application (related data is held in the save memory 75B). Then, when the broadcasting apparatus 41 transmits trigger information of the Execute command adapted to instruct the activation (resumption) of the data broadcasting application, the receiver 60 that received the trigger information resumes the suspended data broadcasting application.

Further, when the broadcasting apparatus 41 transmits trigger information of the Terminate command adapted to instruct the termination of the data broadcasting application in response to the end of the program, the receiver 60 that received the trigger information terminates the active data broadcasting application.

### [State Transitions of the Data Broadcasting Application]

Fig. 17 illustrates state transitions of a data broadcasting application in the receiver 60.

As illustrated in Fig. 17, the data broadcasting application is in one of four different states, namely, Stopped, Ready, Active and Suspended.

The Stopped state refers to a state in which the data broadcasting application has yet to be executed, and in which the program data thereof has yet to be acquired. The Ready state refers to a state in which the data broadcasting application has already been acquired but has yet to be executed. The Active state refers to a state in which the data broadcasting application has been activated and is active. The Suspended state refers to a state in which the execution of the data broadcasting application has been suspended and the information indicating the state of the application at the time of suspension is held in the save memory 75B.

The data broadcasting application in the Stopped state makes a transition to the Ready state if the program data of the data broadcasting application is acquired following the reception of the trigger information of the Pre-cache command.

The data broadcasting application in the Stopped or Ready state makes a transition to the Active state if the data broadcasting application is activated following the reception of the trigger information of the Execute command.

The data broadcasting application in the Active state makes a transition to the Suspended state if the active data broadcasting application is suspended following the reception of the trigger information of the Suspend command.

The data broadcasting application in the Suspended state makes a transition to the Active state if the suspended data broadcasting application is resumed following the reception of the trigger information of the Execute command.

The data broadcasting application in the Ready, Active or Suspended state makes a transition to the Stopped state if the trigger information of the Terminate command is received. It should be noted that the data broadcasting application makes a transition to the Stopped state not only based on the trigger information of the Terminate command but also if the App_expire_date is passed, if other data broadcasting program is executed or if the reception channels are changed.

### [Interrupt Handling in Response to User Operation to Change the Images]

A description will be given next of the handling of an interrupt by the receiver in response to user operation to change the images (hereinafter referred to as the handling of the image change interrupt). Before doing so, a description will be given of various image changes.

Fig. 18 illustrates the configuration of a digital terrestrial broadcasting signal, i.e., an example of digital television broadcasting.

For digital terrestrial signals, physical channels are provided which have a 6 MHz (or 8 MHz) band along the frequency axis, with each physical channel occupied by a broadcaster for broadcasting. It should be noted that a plurality of physical channels may be occupied by the same broadcaster.

A physical channel is made up of one or more services (also referred to as logical channels). These services correspond to so-called channels that are changed to change the programs to be received by the receiver 60. Each physical channel broadcasts channel selection information (corresponds to VCT for ATSC and NIT for DVB or ARIB) indicating, for example, a list of services contained therein and their broadcasting frequencies. The PID of the PMT of each service is included in the PAT for each physical channel.

Each service (logical channel) includes one or more ESs. In the case of a program compatible with multi-view that allows to change the images from different viewpoints (camera positions), for example, each service includes a plurality of image ESs. The PID of each ES is included in the PMT of each service.

In the configuration described above, a user operation to change the images is one of three types, namely, changes 1 to 3 shown in Fig. 18. That is, change 1 is a change of image ESs within the same service. Change 2 is a change of services within the same physical channel. Change 3 is a change from one physical channel to another. It should be noted that change 3 can be classified into two cases, one in which the broadcaster of the previous physical channel and that of the new physical channel are the same, and another in which the two broadcasters are different.

A description will be given next of the handling of the image change interrupt. Fig. 19 is a flowchart describing the handling of the image change interrupt.

The image change interrupt is handled when the user makes one of the above operations to change the images.

In step S31, the control section 68 determines whether there is any active data broadcasting application. The process proceeds to step S32 when it is determined that there is an active data broadcasting application. It should be noted that if it is determined that there is no active data broadcasting application, the handling of the image change interrupt is terminated.

In step S32, the control section 68 determines the type of image change operation that initiated the handling of the image change interrupt in question based on the channel selection information acquired from the television broadcasting signal being received. More specifically, the control section 68 determines which of changes 1 to 3 shown in Fig. 18 is the operation made by the user. Further, when it is determined that change 3 is the operation made by the user, the control section 68 determines whether the broadcaster of the previous physical channel and that of the new physical channel are the same.

In step S33, the control section 68 determines whether the type of image change operation determined in step S32 falls under the scope specified by App_life_scope stored in association with the active data broadcasting application. When it is determined here that the type of image change operation falls under the scope specified by App_life_scope, this handling of the image change interrupt is terminated. That is, the active data broadcasting application remains active.

In contrast, if it is determined that the type of image change operation determined in step S32 does not fall under the scope specified by App_life_scope, the process proceeds to step S34. In step S34, the control section 68 controls the application engine 74 to terminate the active data broadcasting application. The application engine 74 terminates the active data broadcasting application, deletes the data about the active data broadcasting application from the work memory 75A and save memory 75B and deletes the program data of the same application from the recording section 71 or cache memory 73 under control of the control section 68.

This completes the handling of the image change interrupt. The handling of the image change interrupt described above makes it possible to continue or terminate the execution of an active application program in accordance with the type of image change operation.

It should be noted that although the above image change interrupt is handled for an active data broadcasting application, the image change interrupt may be handled for a data broadcasting application making a transition to suspended state.

### [Operation Scenario by Handling the Image Change Interrupt]

A description will be given next of an example of operation scenario using the above handling of the image change interrupt.

Fig. 20 illustrates the operation scenario when the App_life_scope of the active data broadcasting application is ES bound.

If the trigger information of the Execute command for a data broadcasting application App-A is received while an image ES1 is received and displayed by the receiver 60 during a multi-view-compatible program A1 broadcast by a service (so-called channel) A, the data broadcasting application App-A is activated in response thereto. Then, when the user makes an operation to change the image of the program A1 to an image ES2, the image change interrupt is handled. In this case, the ESs are changed. Therefore, the active data broadcasting application App-A is terminated.

Then, when the trigger information of the Execute command for a data broadcasting application App-B transmitted by the image ES2 of the service A is received, the data broadcasting application App-B is activated in response thereto. Then, if the user does not make any operation to change the images, the activated data broadcasting application App-B is terminated in accordance with the trigger information of the Terminate command transmitted at the end of the program A1.

Fig. 21 illustrates the operation scenario when the App_life_scope of the active data broadcasting application is service bound.

If the trigger information of the Execute command for the data broadcasting application App-A is received while the image ES1 is received and displayed by the receiver 60 during the multi-view-compatible program A1 broadcast by a service A, the data broadcasting application App-A is activated in response thereto. Then, when the user makes an operation to change the image of the program A1 to the image ES2, the image change interrupt is handled. In this case, the images are changed within the same service. Therefore, the execution of the active data broadcasting application App-A continues.

Then, when the channel is changed to a program B 1 broadcast by a service B, the image change interrupt is handled again. In this case, the images are changed between different services. Therefore, the active data broadcasting application App-A is terminated.

Then, if the trigger information of the Execute command for the data broadcasting application App-B transmitted by the service B is received, the data broadcasting application App-B is activated in response thereto. Then, if the user does not make any operation to change the images, the activated data broadcasting application App-B is terminated in accordance with the trigger information of the Terminate command transmitted at the end of the program B 1.

Fig. 22 illustrates the operation scenario when the App_life_scope of the active data broadcasting application is Provider bound.

If the trigger information of the Execute command for the data broadcasting application App-A is received while the program A 1 broadcast by the service A is received and displayed by the receiver 60, the data broadcasting application App-A is activated in response thereto. Then, when the channel is changed to the program B 1 broadcast by the service B which is provided by the same broadcaster as that providing the service A, the image change interrupt is handled. In this case, the images are changed within the same broadcaster. Therefore, the execution of the active data broadcasting application App-A continues.

Then, when the channel is changed to a program C 1 broadcast by a service C which is provided by a broadcaster different from that providing the services A and B, the image change interrupt is handled again. In this case, the images are changed between different broadcasters. Therefore, the active data broadcasting application App-A is terminated.

Then, if the trigger information of the Execute command for the data broadcasting application App-B transmitted by the service C is received, the data broadcasting application App-B is activated in response thereto. Then, if the user does not make any operation to change the images, the activated data broadcasting application App-B is terminated in accordance with the trigger information of the Terminate command transmitted at the end of the program C1.

Fig. 23 illustrates the operation scenario when the App_life_scope of the active data broadcasting application is Un-bound.

If the trigger information of the Execute command for the data broadcasting application App-A is received while the program A 1 broadcast by the service A is received and displayed by the receiver 60, the data broadcasting application App-A is activated in response thereto. Then, when the channel is changed to the program B 1 broadcast by the service B which is provided by a broadcaster different from that providing the service A, the image change interrupt is handled. However, App_life_scope is Un-bound. Therefore, the execution of the active data broadcasting application App-A continues. That is, the execution of the active data broadcasting application App-A continues once the trigger information of the Execute command therefor is received.

As described above, the image change interrupt handling makes it possible to continue or terminate the execution of a data broadcasting application in accordance with the type of image change operation. This allows to continue the execution of the data broadcasting application even if the user makes an operation to change the images so long as this change takes place within the same service or broadcaster. Further, it is possible to continue the execution of a data broadcasting application common to all the services (channels).

It should be noted that although the App_life_scope of an active data broadcasting application is included in trigger information of the Execute command in the present embodiment, the App_life_scope may be included, for example, in the program of the data broadcasting application.

Incidentally, the above series of processes may be performed by hardware or software. If the series of processes are performed by software, the program making up the software is installed from a program recording media to a computer incorporated in dedicated hardware, a general-purpose personal computer capable of performing various functions when installed with various programs or other computer.

Fig. 24 is a block diagram illustrating a hardware configuration example of a computer adapted to perform the above series of processes using a program.

In a computer 100, a CPU (Central Processing Unit) 101, ROM (Read Only Memory) 102 and RAM (Random Access Memory) 103 are connected to each other via a bus 104.

An input/output interface 105 is also connected to the bus 104. An input section 106 and output section 107 are connected to the input/output interface 105. The input section 106 includes, for example, a keyboard, mouse and microphone. The output section 107 includes, for example, a display and speaker. Further, a storage section 108, communication section 109 and drive 110 are connected to the input/output interface 105. The storage section 108 includes, for example, a harddisk or non-volatile memory. The communication section 109 includes, for example, a network interface. The drive 110 drives a removable media 111 such as magnetic disk, optical disk, magneto-optical disk or semiconductor memory.

In the computer configured as described above, the CPU 101 loads the program from the storage section 108 into the RAM 103 for execution via the input/output interface 105 and bus 104, thus allowing for the above series of processes to be performed.

It should be noted that the program executed by the computer may perform the processes not only chronologically according to the sequence described in the present specification but also in parallel or when necessary as when invoked.

On the other hand, the program may be executed by a single computer or by a plurality of computers in a distributed manner. Further, the program may be transferred to a remote computer for execution.

On the other hand, the term "system" refers to an apparatus as a whole made up of a plurality of devices in the present specification.

It should be noted that the embodiments of the present disclosure is not limited to that described above and may be modified in various manners without departing from the scope of the present disclosure.

**[Reference Signs List]**

| | |
|---|---|
| 30 | Broadcasting system |
| 41 | Broadcasting apparatus |
| 42 | Server |
| 60 | Receiver |
| 61 | Tuner |
| 62 | Demultiplexing section |
| 63 | Audio decoder |
| 64 | Audio output section |
| 65 | Video decoder |
| 66 | Trigger detection section |
| 67 | Video output section |
| 68 | Control section |
| 69 | Memory |
| 70 | Operation section |
| 71 | Recoding section |
| 72 | Communication interface |
| 73 | Cache memory |
| 74 | Application engine |
| 75 | Memory |
| 75A | Work memory |
| 75B | Save memory |

## Claims

1. A receiver for receiving transmitted AV content, the receiver comprising:
extraction means for extracting trigger information relating to control over an application program to be executed in response to the AV content; and
control means for controlling the execution of the application program in accordance with the command specified by the extracted trigger information and continuing or terminating the execution of the active application program if the images of the AV content are changed.

2. The receiver of claim 1, wherein
the control means continues or terminates the execution of an active application program based on execution continuation information for the application program if the images of the AV content are changed.

3. The receiver of claim 1, wherein
the execution continuation information includes one of:
ES bound with which the execution of the active application program can be continued within the same ES if the images of the AV content are changed;
service bound with which the execution of the active application program can be continued within the same service if the images of the AV content are changed;
Provider bound with which the execution of the active application program can be continued within the same broadcaster if the images of the AV content are changed; or
Un-bound with which the execution of the active application program can be continued in an unbound manner if the images of the AV content are changed.

4. The receiver of claim 2 or 3, wherein
the execution continuation information is included in the trigger information.

5. The receiver of claim 2 or 3, wherein
the execution continuation information is included in the application program.

6. The receiver of claim X, wherein
the control means further controls the acquisition of the application program, the activation thereof, the firing of an event in the active application program, the suspension of the active application program or the termination thereof in accordance with the command specified by the extracted trigger information.

7. A reception method of a receiver adapted to receive transmitted AV content, the reception method comprising:
an extraction step of extracting trigger information relating to control over an application program that has been transmitted together with AV content and that is to be executed in response to the AV content;
a first control step of controlling the execution of the application program in accordance with the command specified by the extracted trigger information; and
a second control step of continuing or terminating the execution of the active application program if the images of the AV content are changed.

8. A program for controlling a receiver adapted to receive transmitted AV content, the program causing a computer of the receiver to perform a process, the process comprising:
an extraction step of extracting trigger information relating to control over an application program that has been transmitted together with AV content and that is to be executed in response to the AV content;
a first control step of controlling the execution of the application program in accordance with the command specified by the extracted trigger information; and
a second control step of continuing or terminating the execution of the active application program if the images of the AV content are changed.

9. A transmitter for transmitting AV content, the transmitter comprising:
transmission means for transmitting, together with the AV content, trigger information relating to control over an application program to be executed by a receiver in response to the AV content, wherein
the trigger information includes execution continuation information used to determine whether to continue or terminate the execution of the active application program if the images of the AV content are changed while the application program is active in the receiver.

10. The transmitter of claim 9, wherein
the execution continuation information includes one of:
ES bound with which the execution of the active application program can be continued within the same ES if the images of the AV content are changed;
service bound with which the execution of the active application program can be continued within the same service if the images of the AV content are changed;
Provider bound with which the execution of the active application program can be continued within the same broadcaster if the images of the AV content are changed; or
Un-bound with which the execution of the active application program can be continued in an unbound manner if the images of the AV content are changed.

11. The transmitter of claim 9 or 10, wherein
the commands specified by the trigger information include at least one of those adapted to control the acquisition of the application program, the activation thereof, the firing of an event in the active application program, the suspension of the active application program and the termination thereof.

12. A transmission method of a transmitter adapted to transmit AV content, the transmission method comprising:
a transmission step of transmitting, together with the AV content, trigger information relating to control over an application program to be executed by a receiver in response to the AV content, wherein
the trigger information includes execution continuation information used to determine whether to continue or terminate the execution of the active application program if the images of the AV content are changed while the application program is active in the receiver.

13. A program for controlling a transmitter adapted to transmit AV content, the program causing a computer of the transmitter to perform a process, the process comprising:
a transmission step of transmitting, together with the AV content, trigger information relating to control over an application program to be executed by a receiver in response to the AV content, wherein
the trigger information includes execution continuation information used to determine whether to continue or terminate the execution of the active application program if the images of the AV content are changed while the application program is active in the receiver.

14. A broadcasting system comprising:
a transmitter adapted to transmit AV content; and
a receiver adapted to receive the transmitted AV content, wherein
the transmitter includes
transmission means for transmitting, together with the AV content, trigger information relating to control over an application program to be executed by a receiver in response to the AV content, and
the receiver includes
extraction means for extracting the trigger information transmitted together with the AV content; and
control means for controlling the execution of the application program in accordance with the command specified by the extracted trigger information and continuing or terminating the execution of the active application program if the images of the AV content are changed.
